(19) Europäisches Patentamt
European Patent Office
Office européen des brevets

(11) EP 0 731 057 B1

(12) **EUROPEAN PATENT SPECIFICATION**

(45) Date of publication and mention
of the grant of the patent:
**28.04.1999 Bulletin 1999/17**

(51) Int. Cl.$^6$: **C01B 33/36**

(21) Application number: **96300973.3**

(22) Date of filing: **13.02.1996**

(54) **Method for improving thermal stability of sepiolite**

Verfahren zur Verbesserung der thermischen Stabilität von Sepiolith

Procédé d'amélioration de la stabilité thermique de la sépiolite

(84) Designated Contracting States:
**DE FR GB**

(30) Priority: **10.03.1995 JP 79810/95**

(43) Date of publication of application:
**11.09.1996 Bulletin 1996/37**

(73) Proprietor:
**Agency of Industrial Science and Technology
of Ministry of International Trade and Industry
Chiyoda-ku Tokyo (JP)**

(72) Inventors:
• **Horio, Masakazu
Konan-shi, Aichi-ken (JP)**
• **Suzuki, Kenzi
Niwa-gun, Aichi-ken (JP)**
• **Tomura, Shinji
Nagoya (JP)**
• **Inukai, Keiichi
Midori-ku, Nagoya (JP)**

(74) Representative:
**Smith, Norman Ian et al
fJ CLEVELAND
40-43 Chancery Lane
London WC2A 1JQ (GB)**

(56) References cited:
• CHEMICAL ABSTRACTS, vol. 102, no. 12, 25 March 1985 Columbus, Ohio, US; abstract no. 101198a, page 344; XP002006105 & A. CORMA ET AL.: "Actas Simp. Iberoam. Catal., 9th 1984, 2" , SOC. IBEROAM. CATAL. , LISBON, PT
• CHEMICAL ABSTRACTS, vol. 101, no. 24, 10 December 1984 Columbus, Ohio, US; abstract no. 217010s, page 360; XP002006106 & AN. QUIM., SER. B (3, SUPPL. 1), vol. 79, no. 3, 1983, pages 552-556, M. N. FERNANDEZ HERNANDEZ ET AL.:
• CHEMICAL ABSTRACTS, vol. 78, no. 16, 23 April 1973 Columbus, Ohio, US; abstract no. 100386j, page 181; XP002006107 & BOL. SOC. ESPAN. CERAM. VIDRIO, vol. 11, no. 6, 1972, pages 365-374, T. FERNANDEZ ALVAREZ:
• K. BRAUNER ET AL.: "TSCHERMAKS MINERALOGISCHE UND PETROGRAPHISCHE MITTEILUNGEN Volume VI" 1956 , SPRINGER-VERLAG , VIENNA, AT XP000571133 * page 120 - page 140 *
• CLAYS AND CLAY MINERALS, vol. 22, 1974, OXFORD, GB, pages 285-293, XP000571129 H. NAGATA ET AL.:
• JOURNAL OF CLAY SCIENCE SOCIETY OF JAPAN, vol. 32, no. 3, 1992, TOKYO, JP, pages 154-172, XP000571215 R. OTSUKA ET AL.:

**Description**

Sepiolite is known to have a crystal structure including minute channels and therefore to be useful as a carrier for catalysts and a material for the separation, removal, and recovery of gases. At elevated temperatures, however, it is susceptible to folding which bends the crystal structure and crushes the minute channel holes, depriving it of its effectiveness. This invention aims to provide a method for improving the thermal stability of sepiolite, thereby enabling sepiolite to retain its crystal structure stably even at elevated temperatures.

Chem. Abs., 102, 1985, p. 344, abstract no. 101198a, discloses a method of making a catalyst that comprises nickel supported by sepiolite. According to this method, sepiolite is treated with hydrochloric acid, impregnated with nickel nitrate or nickel formate, calcined at 450°C for 3 hours and then reduced with hydrogen at 450°C for 16 hours.

The inventors continued a study in search of a method for preventing sepiolite from folding at elevated temperatures, namely a method for improving the thermal stability of sepiolite. As a result of their study, they perfected the present invention.

Specifically, this invention provides a method for improving the thermal stability of sepiolite characterized in that the method consists essentially of dispersing sepiolite in a mineral acid and leaving the resultant dispersion therein at normal room temperature for one to three hours, recovering said sepiolite from said mineral acid, dispersing said sepiolite in a salt solution containing divalent cations with which $Mg^{++}$ of said sepiolite are to be ion-exchanged and leaving the resultant dispersion at normal room temperature to allow ion-exchange said $Mg^{++}$ of said sepiolite with said divalent cation and thereafter recovering the resultant sepiolite.

Figure 1 is a diagram showing a model of the ideal structure of sepiolite crystal projected on an ab plane.

Figure 2 is a schematic diagram showing bends formed in the crystal structure of sepiolite in consequence of dehydration.

Figure 3 is a diagram showing powder X-ray diffraction curves obtained of the sepiolite in working examples and a comparative experiment.

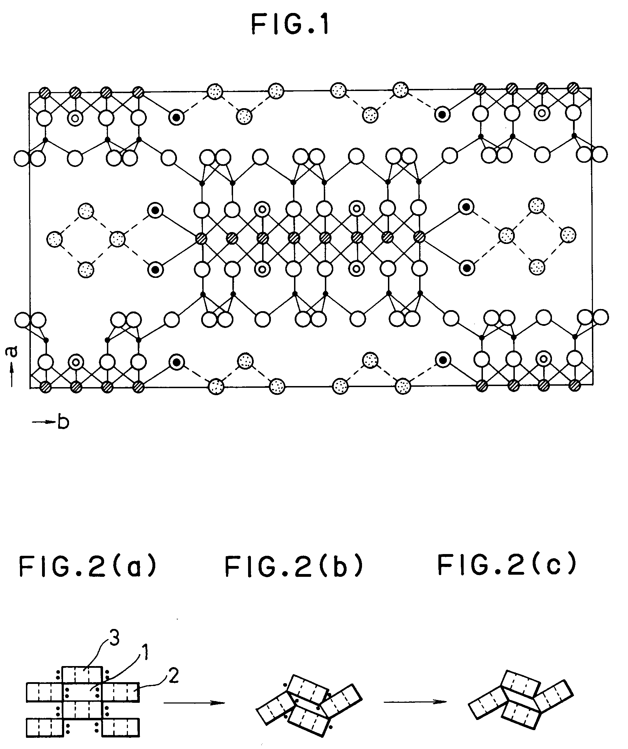

The sepiolite which is contemplated by this invention is a species of clayish mineral. The sepiolite will be described below. Figure 1 is a diagram showing a model of the ideal structure of sepiolite crystal projected on an ab plane [Braunes, K. and Preisinger, A., Miner. Petro. Mitt., Vol. 6, pp. 120-140 (1956)].

In the diagram, each ● denotes an Si atom, ⊘ an Mg atom, ○ an oxygen atom, ◎ an OH group, ⊛ an $H_2O$ zeol, and ⊙ an $H_2O$ cryst. Since sepiolite assumes a fibrous form extending in the direction perpendicular to the ab plane shown in Figure 1, namely in the direction of the $\underline{c}$ axis, Figure 1 depicts a cross section of sepiolite fiber. In this structure, 2 : 1 type layers each composed of a MgO octahedron sheet nipped at the upper and lower ends thereof by opposed Si-O tetrahedron sheets are inverted to form channels measuring 6.7 x 13.4 Angstroms. The Mg ions on the wall of each channel formed in consequence of the inversion retain the structure of the MgO octahedron stably by severally coordinating two molecules of water in place of oxygen. The Mg ions on the walls of the channels can be replaced with divalent cations.

In an actual sample of sepiolite, part of the Mg ions in the octahedrons are replaced by Al, Fe, etc. In spite of this actual state, the following description of sepiolite will be based on an ideal model [Ryohei Otsuka, Tasuku Shimoda, Hiroya Shimosaka, Hiroshi Nagata, Masahiro Shimizu, and Naofumi Sakamoto, Journal of Clay Science Society of Japan, Vol. 32, No. 3, pp. 154-172 (1992)].

The water molecules coordinated by the Mg ions are removed by heating in two stages. The behavior of this dehydration may be expressed by the following composition formulas [H. Nagata, S. Shimoda, T. Sudo, Clays and Clay Minerals, 22, pp. 285 to 293 (1974)].

Step 1:

$$Mg_8Si_{12}O_{30}(OH)_4(OH_2)_4 \leftrightarrow Mg_8Si_{12}O_{30}(OH)_4(OH_2)_2$$

Step 2:

$$Mg_8Si_{12}O_{30}(OH)_4(OH_2)_2 \rightarrow Mg_8Si_{12}O_{30}(OH)_4$$

The Mg ions stably retain the octahedral structure by coordinating four oxygen atoms and two water molecules as shown in Figure 1. When one molecule of water is removed from the channel by heating, the Mg ions assume a distorted structure by being coordinated to the oxygen atoms exposed inside the channel, with the result that the channel is folded over itself.

In other words, the removal of the water molecules coordinated to the Mg ions results in a change of structure.

By the dehydration in the first stage, the sepiolite is caused to fold as shown in Figure 2 and the channel is transformed into a folded structure by the fact that one of the two water molecules coordinated to the Mg ion in the channel is removed.

In Figure 2, 1 stands for a channel and 2 and 3 each stand for a unit structure of a 2 : 1 type layer formed of an Si-O tetrahedron and an Mg-O octahedron. When one of the two molecules of water in the channel is removed by heating (step 1) as shown in Figure 2 (a), the structure assumes a distorted shape as shown in Figure 2 (b). When the one remaining molecule of water is further removed (step 2), the structure assumes a further distorted structure as shown in Figure 2 (c).

When the bending of the crystal structure owing to dehydration is observed by powder X-ray diffraction, the sepiolite tetrahydrate shows the most intense and sharp X-ray diffraction peak at d = 1.2 nm. When this sepiolite tetrahydrate is transformed by dehydration into a dehydrate, the peak decreases or vanishes and a weak peak newly appears instead at d = 1.0 nm. While the tetrahydrate has peaks at d = 0.46 nm and d - 0.43 nm, the dihydrate loses the peak at 0.46 nm and retains the peak at 0.43 nm. The occurrence or nonoccurrence of folding can, therefore, be confirmed from the profile of the X-ray diffraction (Toshio Kitayama and Akira Abe, Japan Journal of Chemistry, 1989, No. 11, pp. 1824-1829).

The present inventors continued a study in search of a method for preventing sepiolite from folding at elevated temperatures, namely a method for enhancing the thermal stability of sepiolite, and consequently found that the thermal stability is enhanced by the following treatment.

To be specific this invention pertains to a method for improving the thermal stability of sepiolite characterized in that the method consists essentially of dispersing sepiolite in a mineral acid and leaving the resultant dispersion therein at normal room temperature for one to three hours, recovering said sepiolite from said mineral acid, dispersing said sepiolite in a salt solution containing divalent cations with which $Mg^{++}$ of said sepiolite are to be ion-exchanged and leaving the resultant dispersion at normal room temperature to allow ion-exchange said $Mg^{++}$ of said sepiolite with said divalent cation and thereafter recovering the resultant sepiolite.

Practically, nitric acid or hydrochloric acid is an appropriate choice for the mineral acid.

The sepiolite resulting from the treatment with the mineral acid is immersed in a salt solution containing a divalent cation destined to cause ion exchange in the sepiolite, such as, for example, a solution of a nitrate or a hydrochloride. By the treatment with the mineral acid, part of the Mg ions on the wall of the channel are eluted. However, cations are reintroduced into the sepiolite when it is immersed in the salt solution containing a cationic element. Since the total amount of replaceable Mg ions on the channel wall of the sepiolite is 1.57 mmol/g, the concentration of the salt solution and the amount thereof are appropriately selected such that the salt solution contains cations in a larger amount than the total amount of Mg ions.

The divalent cation to be substituted is at least one species selected from the group consisting of Mg, Ca, Ba, Mn, Fe, Co, Ni, Cu, and Zn. Though all of the working examples set out below represent embodiments of this invention using Mg, this invention can be worked substantially similarly with other species of the divalent cation.

The most appropriate and practical method for working this invention will be shown below.

In 100 mL of an aqueous 0.5M nitric acid solution, 5.0 g of sepiolite is thoroughly dispersed and left standing therein at rest at normal room temperature for three hours. The resultant dispersion is centrifuged or filtered to separate and recover the sepiolite. Then, the recovered sepiolite is dispersed in 100 mL of an aqueous IM magnesium nitrate solution and left standing therein at rest at normal room temperature for one hour. Since the amount of replaceable Mg ions on the channel wall of the sepiolite is 1.57 mmol/g, the concentration of the magnesium nitrate solution and the amount thereof are appropriately so set that the concentration of magnesium ions contained in the solution and the amount of the solution are larger than 1.57 mmol/g. The dispersion, after the ion-exchange treatment, is centrifuged or filtered to separate and recover the sepiolite, washed with water, and dried at 110°C. The step of washing with water and the step of drying may be omitted without inducing any serious inconvenience.

This invention will now be described more specifically with reference to working examples.

Example 1:

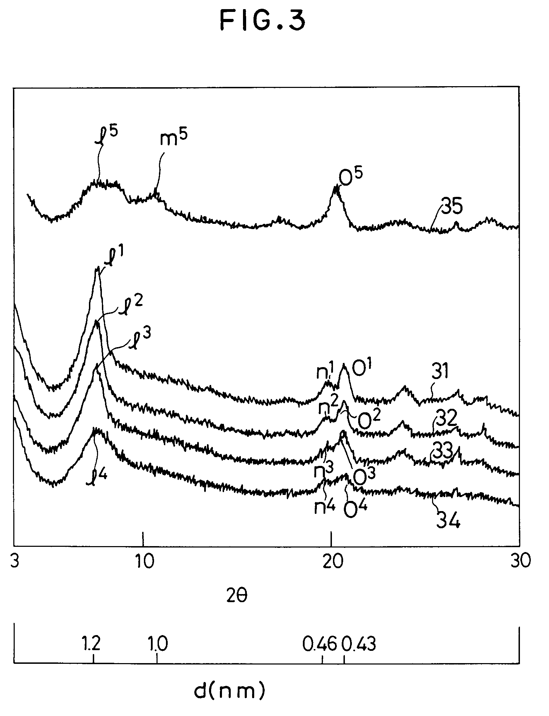

In 100 mL of an aqueous 0.5M nitric acid solution, 5.0 g of sepiolite was thoroughly dispersed and left standing therein at rest at normal room temperature for three hours. Then, the resultant dispersion was centrifuged to expel excess nitric acid solution. The residue of this centrifugation was dispersed in 100 mL of an aqueous 1M magnesium nitrate solution and left standing therein at rest at normal room temperature for one hour to effect an ion-exchange treatment. The resultant dispersion was centrifuged and washed with water to recover the sepiolite. The recovered sepiolite was heat-treated at 400°C for two hours and subjected to powder X-ray diffraction. The results are shown by the curve 31 in Figure 3.

In the diagram, $l^1$, $n^1$, and $o^1$ represent peaks respectively at d =1.2, 0.46, and 0.43. The data indicate that the crystal structure showed no discernible bend. Examples 2 to 4:

Three specimens of sepiolite treated in the same manner as in Example 1 were heat-treated respectively at 500°C, 600°C, and 700°C. The produced samples were subjected to powder X-ray diffraction. The results are shown respectively by the curves 32, 33, and 34 in Figure 3.

In the diagram, $I^2$, $I^3$, $I^4$; $n^2$, $n^3$, $n^4$; and $o^2$, $o^3$, and $o^4$ represent peaks respectively at d = 1.2, 0.46, and 0.43. The data indicate that the crystal structures showed no discernible bend.

Comparative Experiment 1:

Sepiolite was heat-treated at 400°C for two hours and then subjected to powder X-ray diffraction. The results are shown by curve 35 in Figure 3. In the diagram, $I^5$ represents a weakpeak at d = 1.2, $m^5$ represents a weakpeak at d = 1.0 and $o^5$ represents a peak at d = 0.43. The data indicate that the crystal structure sustained a bend.

## Claims

1. A method for improving the thermal stability of sepiolite characterized in that the method consists essentially of dispersing sepiolite in a mineral acid and leaving the resultant dispersion therein at normal room temperature for one to three hours, recovering said sepiolite from said mineral acid, dispersing said sepiolite in a salt solution containing divalent cations with which $Mg^{++}$ of said sepiolite are to be ion-exchanged and leaving the resultant dispersion at normal room temperature to allow ion-exchange said $Mg^{++}$ of said sepiolite with said divalent cation and thereafter recovering the resultant sepiolite.

2. The method as claimed in claim 1, wherein said mineral acid is one member selected from the group consisting of nitric acid and hydrochloric acid.

3. The method as claimed in claim 1 or claim 2, wherein said divalent cation is at least one member selected from the group consisting of Mg, Ca, Ba, Mn, Fe, Co, Ni, Cu, and Zn.

## Patentansprüche

1. Verfahren zur Verbesserung der thermischen Stabilität von Sepiolith, dadurch **gekennzeichnet**, daß das Verfahren im wesentlichen besteht aus Dispergieren von Sepiolith in einer Mineralsäure und Belassen der resultierenden Dispersion darin bei normaler Raumtemperatur für ein bis drei Stunden, Rückgewinnen des Sepioliths aus der Mineralsäure, Dispergieren des Sepioliths in einer Salzlösung, die zweiwertige Kationen enthält, die mit $Mg^{++}$ des Sepioliths auszutauschen sind, und Belassen der resultierenden Dispersion bei normaler Raumtemperatur, um einen Ionenaustausch von $Mg^{++}$ des Sepioliths mit den zweiwertigen Kationen zu ermöglichen, und anschließendes Rückgewinnen des resultierenden Sepioliths.

2. Verfahren nach Anspruch 1, dadurch **gekennzeichnet**, daß die Mineralsäure ein aus der aus Salpetersäure und Salzsäure bestehenden Gruppe gewähltes Element ist.

3. Verfahren nach Anspruch 1 oder 2, dadurch **gekennzeichnet**, daß das zweiwertige Kation mindestens ein aus der aus Mg, Ca, Ba, Mn, Fe, Co, Ni, Cu und Zn bestehenden Gruppe gewähltes Element ist.

## Revendications

1. Procédé pour améliorer la résistance à la chaleur de la sépiolite, caractérisé en ce que le procédé consiste essentiellement à disperser de la sépiolite dans un acide minéral et à laisser la dispersion obtenue dans celui-ci à une température ambiante normale pendant une à trois heures, à récupérer ladite sépiolite dans ledit acide minéral, à disperser ladite sépiolite dans une solution d'un sel contenant des cations divalents avec lesquels $Mg^{++}$ de ladite sépiolite doivent faire l'objet d'un échange d'ions et à laisser la dispersion obtenue à la température ambiante normale pour permettre l'échange desdits ions $Mg^{++}$ de ladite sépiolite avec ledit cation divalent, puis à récupérer la sépiolite obtenue.

2. Procédé selon la revendication 1, dans lequel ledit acide minéral est un membre choisi dans le groupe consistant en l'acide nitrique et l'acide chlorhydrique.

3. Procédé selon la revendication 1 ou 2, dans lequel ledit cation divalent est au moins un membre choisi dans le groupe consistant en Mg, Ca, Ba, Mn, Fe, Co, Ni, Cu et Zn.

# FIG.1

# FIG.2(a)  FIG.2(b)  FIG.2(c)

# FIG.3